# EUROPÄISCHE PATENTSCHRIFT

(11) **EP 1 524 153 B1**
(45) Veröffentlichungstag und Bekanntmachung des Hinweises auf die Patenterteilung: **26.04.2006**
(21) Anmeldenummer: 04024444.4
(22) Anmeldetag: 14.10.2004
(51) Int. Cl.: B60R 5/04, B60R 21/06

(54) **Schutzvorrichtung für einen Laderaum eines Kraftfahrzeugs**
Protection device for a luggage compartment of a vehicle
Dispositif de protection pour un coffre de véhicule

(30) Priorität: 15.10.2003 DE 10348892
(43) Veröffentlichungstag der Anmeldung: 20.04.2005
(73) Patentinhaber: BOS GmbH & Co. KG, 73760 Ostfildern (DE)
(72) Erfinder: Walter, Herbert, 71332 Ebersbach (DE); Schlecht, Werner P., 71665 Vaihingen/Enz (DE); Sparrer, Henning, 73235 Weilheim (DE); Ehrenberger, Marina, 73730 Esslingen (DE); Seeg, Thomas, 73760 Ostfildern (DE)
(74) Vertreter: Patentanwälte Ruff, Wilhelm, Beier, Dauster & Partner

(56) Entgegenhaltungen:
- EP-A- 0 943 498
- EP-A- 0 976 615
- DE-A- 4 123 655
- DE-A- 19 722 501
- PATENT ABSTRACTS OF JAPAN Bd. 0135, Nr. 12 (M-893), 16. November 1989 (1989-11-16) & JP 01 204836 A (KANTO AUTO WORKS LTD), 17. August 1989 (1989-08-17)
- PATENT ABSTRACTS OF JAPAN Bd. 0135, Nr. 12 (M-893), 16. November 1989 (1989-11-16) & JP 01 204837 A (KANTO AUTO WORKS LTD), 17. August 1989 (1989-08-17)
- PATENT ABSTRACTS OF JAPAN Bd. 0173, Nr. 46 (M-1437), 30. Juni 1993 (1993-06-30) & JP 05 044381 A (NHK SPRING CO LTD), 23. Februar 1993 (1993-02-23)

## Beschreibung

Die Erfindung betrifft eine Schutzvorrichtung für einen Laderaum gemäß dem Oberbegriff des Anspruchs 1 oder 13. Eine derartige Schutzvorrichtung ist aus JP 01 204 837 bekannt.

Eine weitere Schutzvorrichtung ist in Form einer Laderaumabdeckung aus der DE 199 44 948 C1 bekannt. Die bekannte Laderaumabdeckung weist ein flexibles Flächengebilde auf, das in einem Kassettengehäuse auf einer Wickelwelle auf- und abrollbar gehalten ist. Das Kassettengehäuse ist im Bereich einer Rückenlehnenanordnung einer Fondsitzbank positioniert. In einem in Ausziehrichtung vorderen Stirnendbereich ist eine sich über die Breite des Flächengebildes erstreckende formstabile Auszugsleiste vorgesehen, die mit ihren seitlichen Enden über die Seitenränder des Flächengebildes hinaus ragt. Die seitlichen Enden der Auszugsleiste sind in seitlichen Führungsschienen des Laderaumes angeordnet, in denen längsverschiebbare Mitnehmer vorgesehen sind, die die seitlichen Enden der Auszugsleiste mit begrenzter Kraft längs der Führungsschienen mitnehmen. Die Mitnehmer sind durch eine elektrische Antriebsvorrichtung angetrieben, wobei die gegenüberliegenden Mitnehmer vorzugsweise miteinander synchronisiert sind, um eine parallele Auszieh- oder Einschubbewegung der Auszugsleiste und damit des Flächengebildes zu erzielen. Das Flächengebilde ist daher zwischen einer im Kassettengehäuse integrierten, kompakt aufgewickelten Ruheposition und einer einen Laderaum des Kraftfahrzeugs etwa horizontal überdeckenden Schutzposition beweglich gelagert.

Andere bekannte Schutzvorrichtungen für Laderäume von Kombi-Personenkraftwagen weisen zwei Flächengebilde auf, die jeweils auf einer eigenen Wickelwelle aus- und einziehbar gelagert sind. Das eine Flächengebilde ist etwa horizontal ausziehbar und dient als Laderaumabdeckung. Das andere Flächengebilde ist etwa vertikal ausziehbar und dient als Trennvorrichtung zwischen dem Laderaum und einem Fahrgastraum des Kombi-Personenkraftwagens. Das Flächengebilde der Trennvorrichtung ist lichtdurchlässig gestaltet, indem es als Trennnetz ausgebildet ist. Das als Laderaumabdeckung fungierende Flächengebilde ist blickdicht und damit im Wesentlichen lichtundurchlässig ausgebildet, damit in der ausgezogenen Schutzposition der Laderaumabdeckung von außerhalb des Fahrzeugs keine Einblicke auf den Inhalt des Laderaums möglich sind.

Aufgabe der Erfindung ist es, eine Schutzvorrichtung für einen Laderaum eines Kraftfahrzeugs zu schaffen, durch die mit einfachen Mitteln unterschiedliche Schutzzustände für den Laderaum des Kraftfahrzeugs realisierbar sind.

Die Erfindung löst diese Aufgabe durch eine Schutzvorrichtung für einen Laderaum eines Kraftfahrzeugs mit den Merkmalen des Patentanspruchs 1.

Vorteilhafte Weiterbildungen der Erfindung sind in den abhängigen Ansprüchen angegeben.

Die Erfindung beruht auf der Idee, Positionen eines Flächengebildes mit Positionserkennungsmitteln zu erkennen und in Abhängigkeit von erkannten Positionen des Flächengebildes beabstandete Funktionseinrichtungen, mit denen das Flächengebilde in Verbindung steht, so zu steuern, dass das Flächengebilde in einer ersten, etwa horizontal ausgezogenen Schutzposition einen ersten weniger lichtdurchlässigen Flächenstrukturabschnitt und in einer zweiten, etwa vertikal ausgezogenen Schutzposition einen zweiten, stärker lichtdurchlässigen Flächenstrukturabschnitt aufweist. Das Flächengebilde ist alternativ in eine der beiden Schutzpositionen überführbar.

Durch die erfindungsgemäße Lösung dient das Flächengebilde sowohl als etwa horizontal aufgespannte Laderaumabdeckung als auch als etwa vertikal aufgespannte Trennvorrichtung zwischen einem Fahrgastraum und dem Laderaum. In der etwa horizontalen Schutzposition ist das Flächengebilde vorzugsweise etwa auf Höhe oder knapp unterhalb einer Fahrzeugbordkante ausgezogen und überdeckt den Laderaum. Durch eine zumindest weitgehend lichtundurchlässige und daher blickdichte Flächenstruktur des Flächengebildes wird in dieser Position ein Sicht- oder Blickschutz für unterhalb des Flachengebildes befindliches Ladegut gebildet. In der Funktion als Trennvorrichtung ist das Flächengebilde mit der stärker lichtdurchlässigen und somit vorzugsweise zumindest weitgehend durchsichtigen Flächenstruktur etwa vertikal bis zum Dachhimmel ausgezogen. Durch die lichtdurchlässige Flächenstruktur wird der Blick des Fahrzeugführers, insbesondere durch den Rückspiegel, so gut wie nicht behindert.

Erfindungsgemäß wird von den Mitteln zur Positionserkennung die jeweilige Position und/oder Verlagerungsbewegung des Flächengebildes innerhalb des Laderaums erfasst. Über die Steuermittel wird die erfasste Position ausgewertet und die mindestens zwei Funktionseinrichtungen werden entsprechend der erfassten Position angesteuert. Vorzugsweise erfolgen die Erfassung der Position des Flächengebildes und die Ansteuerung der Funktionseinrichtungen mechanisch. Es ist auch möglich, eine elektrische und/oder elektronische, eine pneumatische, eine hydraulische oder eine anders gestaltete Erfassung, Kopplung und Ansteuerung vorzusehen. Eine entsprechende Lösung kann auch Kombinationen der genannten Betriebsweisen umfassen.

Vorteilhaft steht der erste blickdichte Flächenstrukturabschnitt des Flächengebildes mit einer ersten Funktionswelle in Wirkverbindung und der zweite durchsichtige Flächenstrukturabschnitt steht mit einer zweiten Funktionswelle in Wirkverbindung. Vorzugsweise wird in Abhängigkeit von einer erkannten ersten Position eine Ausziehbewegung für den ersten Flächenstrukturabschnitts des Flächengebildes freigegeben und eine Bewegung des zweiten Flächenstrukturabschnitts des Flächengebildes blockiert. In Abhängigkeit von einer erkannten zweiten Position wird eine Einziehbewegung für den ersten Flächenstrukturabschnitt und eine Ausziehbewegung für den zweiten Flächenstrukturabschnitts freigegeben. In Abhängigkeit von einer erkannten dritten Position wird eine Ausziehbewegung für den ersten Flächenstrukturabschnitt und eine Einziehbewegung für den zweiten Flächenstrukturabschnitt freigegeben. In vorteilhafter Weise entspricht die erste Position der kompakt abgelegten Schutzposition, die zweite Position der ersten, etwa horizontal ausgezogenen Schutzposition und die dritte Position entspricht der zweiten, etwa vertikal ausgezogenen Schutzposition.

In Ausgestaltung der Erfindung sind als Funktionseinrichtungen Funktionswellen vorgesehen, auf denen das Flächengebilde auf- und abwickelbar gehalten ist. Vorzugsweise sind diesen Funktionswellen Antriebsmittel zugeordnet, die den jeweiligen Flächenstrukturabschnitt wenigstens in Aufwickelrichtung beaufschlagen. Als Antriebsmittel kann ein mechanischer Federspeicher wie insbesondere eine Rückholfeder vorgesehen sein.

In weiterer Ausgestaltung der Erfindung sind die Mittel zur Positionserkennung als elektrische und/oder elektronische Sensoren ausgeführt, die von einer elektronischen Steuereinheit ausgewertet werden, die in Abhängigkeit von der erkannten Position die Funktionswellen über entsprechende Aktuatoren ansteuert.

In weiterer Ausgestaltung der Erfindung ist die Aktivierung der Funktionswellen zusätzlich zur erkannten Position von der Richtung der ausgeführten Folgebewegung abhängig.

So wird beispielsweise bei der erkannten zweiten Position und einer Folgebewegung in Richtung der ersten Position die zweite Funktionswelle blockiert und bei einer Folgebewegung in Richtung der dritten Position die zweite Funktionswelle für eine Ausziehbewegung freigegeben.

Bei Erreichen der dritten Position können beide Funktionswellen blockiert werden und bei einer Folgebewegung in Richtung der zweiten Position wird die erste Funktionswelle für eine Ausziehbewegung und die zweite Funktionswelle für eine Einziehbewegung freigegeben.

Die der Erfindung zugrundeliegende Aufgabe wird auch dadurch gelöst, dass eine Schutzvorrichtung für einen Laderaum eines Kraftfahrzeugs mit einem flexiblen Flächengebilde, das zwischen einer kompakt abgelegten Ruheposition und wenigstens einer ausgezogenen Schutzposition beweglich gelagert ist, mit wenigstens zwei in Ausziehrichtung aneinander anschließenden Flächenstrukturabschnitten mit unterschiedlicher Lichtdurchlässigkeit versehen ist, die Teil des Flächengebildes sind, wobei ein in Ausziehrichtung rückseitiger Stirnendbereich des Flächengebildes an einer fahrzeugfest gelagerten Wickelwelle befestigt ist, wobei das Flächengebilde an einem parallel zur Wickelwelle im Laderaum beweglich gelagerten Führungsprofil umgelenkt ist, und wobei ein in Ausziehrichtung vorderseitiger Stirnendbereich des Flächengebildes an einem zu der Wickelwelle benachbarten, fahrzeugfesten Bauteil befestigt ist. Durch diese Lösung ist es in einfacher Weise möglich, mittels einer simplen Auf- und Abwickelbewegung der Wickelwelle bei gleichzeitiger räumlicher Verlagerung des Führungsprofiles die unterschiedlichen Flächenstrukturabschnitte des Flächengebildes in ihre Wirk- bzw. Schutzposition zu bringen. Das Führungsprofil ist vorzugsweise über etwa 180° seines Umfangs von dem Flächengebilde umschlungen und kann entweder um seine Längsachse drehbeweglich oder auch fest angeordnet sein. Im ersten Fall übt eine Zugbelastung, die auf das Flächengebilde wirkt, auf das Führungsprofil eine Rollbewegung aus. Im zweiten Fall gleitet das Flächengebilde über den Außenmantel des Führungsprofils.

In Ausgestaltung der Erfindung sind die Längen der Flächenstrukturabschnitte auf die korrespondierenden räumlichen Erstreckungen der zu überdeckenden Laderaumabschnitte abgestimmt. Dadurch ist gewährleistet, dass für eine etwa horizontale Schutzposition der Flächenstrukturabschnitt mit reduzierter Lichtdurchlässigkeit eine blickdichte Laderaumabdeckung bildet, und dass in etwa vertikaler Schutzposition der wenigstens eine Flächenstrukturabschnitt mit erhöhter Lichtdurchlässigkeit einen Durchblick vom Fahrgastraum aus zu einem Heck des Kraftfahrzeugs ermöglicht.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind. Die Formulierungen der Ansprüche werden hiermit ausdrücklich zum Gegenstand der vorliegenden Beschreibung gemacht. Es zeigen:
- Fig. 1: eine perspektivische Darstellung eines Laderaums für ein Kraftfahrzeug, der mit einer Ausführungsform einer erfindungsgemäßen Schutzvorrichtung versehen ist,
- Fig. 2: eine perspektivische Darstellung des Flächengebildes der Schutzvorrichtung aus Fig. 1,
- Fig. 3a: eine perspektivische Darstellung einer ersten Schutzposition des Flächengebildes im Laderaum aus Fig. 1,
- Fig. 3b: eine perspektivische Darstellung einer zweiten Schutzposition des Flächengebildes im Laderaum aus Fig. 1,
- Fig. 3c: eine perspektivische Darstellung einer dritten Schutzposition des Flächengebildes im Laderaum aus Fig. 1,
- Fig. 4a bis c: eine weitere Ausführungsform einer erfindungsgemäßen Schutzvorrichtung in unterschiedlichen Schutzpositionen und
- Fig. 5a bis c: die Ausführungsform nach den Fig. 4a bis c, jedoch in perspektivischer Darstellung.

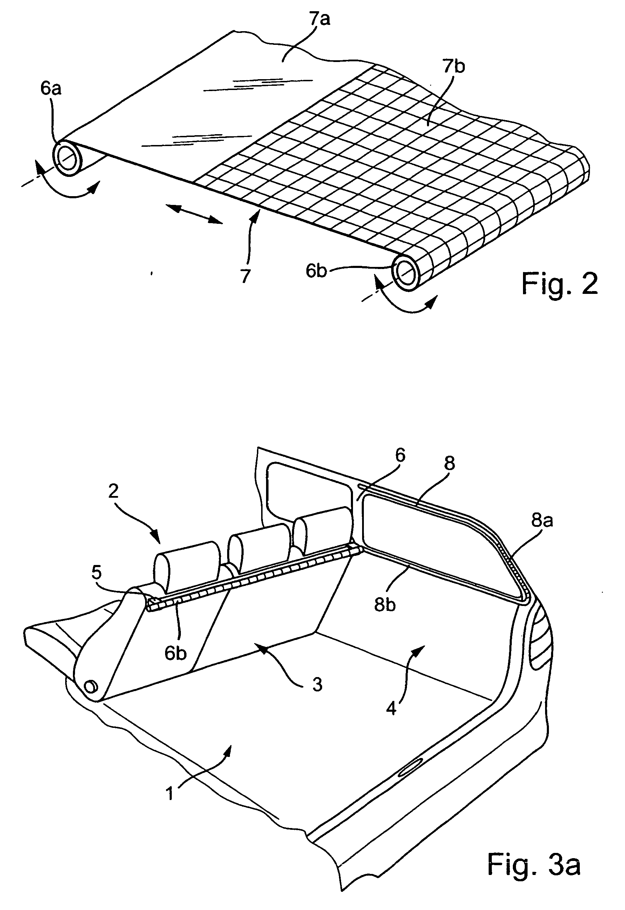

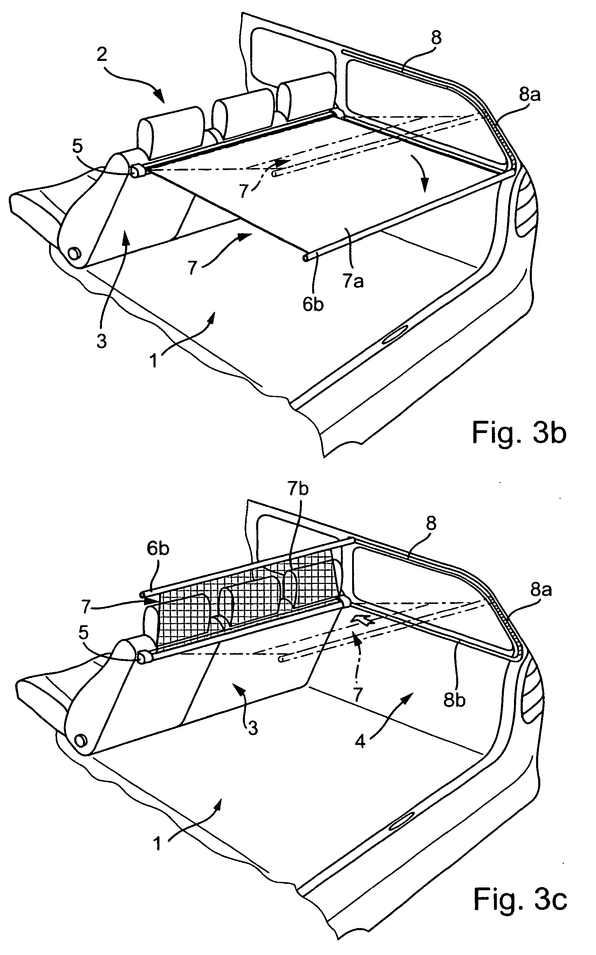

Ein Laderaum 1 für einen Personenkraftwagen, vorliegend für einen Kombi-Personenkraftwagen oder einen ähnlichen Personenkraftwagen mit großem Laderaum, ist in einem Heckbereich des Kraftfahrzeugs angeordnet und nach vorne zum Fahrgastraum 2 hin durch eine Rückenlehnenanordnung 3 einer Fondsitzbank begrenzt. Zu den Seiten hin erfolgt eine Begrenzung durch jeweils eine Fahrzeugseitenwand 4. Nach hinten wird der Laderaum 1 durch eine nicht dargestellte Heckklappe begrenzt. Der Laderaum ist durch eine Schutzvorrichtung sicherbar. Die Schutzvorrichtung weist vorliegend ein Kassettengehäuse 5 auf, das entweder direkt an der Rückenlehnenanordnung 3 oder an den Seitenwänden 4 vorzugsweise lösbar befestigt ist. In dem Kassettengehäuse 5 ist in nicht näher dargestellter Weise eine erste Funktionswelle 6a drehbar gelagert, die im dargestellten Ausführungsbeispiel als Wickelwelle ausgeführt ist, auf der ein erster Flächenstrukturabschnitt 7a eines Flächengebildes 7 auf- und abwickelbar gehalten ist. Der erste Flächenstrukturabschnitt 7a ist vorliegend als zumindest weitgehend lichtundurchlässige und daher blickdichte Folienbahn ausgeführt. Die erste Funktionswelle 6a ist durch ein Antriebsmittel in Form einer nicht näher dargestellten Rückholanordnung, vorliegend in Form einer Rückholfeder, in Aufwickelrichtung des Flächengebildes 7 kraftbeaufschlagt. Das Flächengebilde 7 ist durch einen nicht näher bezeichneten Schlitz im Kassettengehäuse 5 aus diesem herausführbar. Der erste Flächenstrukturabschnitt 7a ist in Längsrichtung mit einem zweiten Flächenstrukturabschnitt 7b des Flächengebildes 7 verbunden. Unter den Begriff der Verbindung der beiden Flächenstrukturabschnitte 7a, 7b untereinander fällt auch eine einstückige Verbindung und Ausführung beider Flächenstrukturabschnitte 7a, 7b in einem gemeinsamen Flächengebilde. Der zweite Flächenstrukturabschnitt 7b ist auf einer zweiten, als Wickelwelle ausgeführten Funktionswelle 6b auf- und abwickelbar gehalten. Der zweite Flächenstrukturabschnitt 7b ist als lichtdurchlässiges Netzgewebe und dadurch zumindest weitgehend transparent ausgebildet. Das Kassettengehäuse erstreckt sich über nahezu die gesamte Breite des Laderaums 1. In entsprechender Weise erstreckt sich das Flächengebilde 7 ebenfalls nahezu über die gesamte Breite des Laderaums 1. In einer kompakt abgelegten Ruheposition (Fig. 3a) ist der erste Flächenstrukturabschnitt 7a des Flächengebildes 7 vollständig auf der ersten Funktionswelle 6a und der zweite Flächenstrukturabschnitt 7b des Flächengebildes 7 vollständig auf der zweiten Funktionswelle 6b aufgerollt. Das Flächengebilde 7 ist zwischen der Ruheposition (Fig. 3a) und einer ersten, etwa horizontal ausgezogenen Schutzposition (Fig. 3b), in der der Laderaum 1 etwa horizontal abgedeckt ist, und einer zweiten etwa vertikal ausgezogenen Schutzposition (Fig. 3c), in der das Flächengebilde 7 etwa vertikal zum Dachhimmel des Kraftfahrzeugs hin aufgespannt ist, beweglich gelagert.

Die zweite Funktionswelle 6b wird bei der Ausziehbewegung des Flächengebildes zwischen der ersten Schutzposition und der zweiten Schutzposition mit ihren gegenüberliegenden Stirnenden in einer durch zwei Führungsschienen auf jeder Fahrzeugseite gebildeten Linearführungsanordnung 8 gehalten. An den Stirnenden der zweiten Funktionswelle 6b ist jeweils ein Zahnrad 9 angeordnet, die mit jeweils einem als Zahnstange 8a ausgeführten ersten Bereich der Führungsschienen in Eingriff kommen. Dieser Bereich bildet eine Zwangsführung für die Funktionswelle, da diese zusätzlich zu ihrer Längsverlagerungsbewegung durch das Kämmen des Zahnrades 9, d.h. eines Ritzels, mit der Zahnstange 8a eine Drehbewegung durchführt. Bei der Linearbewegung der zweiten Funktionswelle 6b in diesem Bereich der Führungsschienen führt die zweite Funktionswelle 6b somit zwangsläufig die überlagerte Drehbewegung aus, durch welche der zweite Flächenstrukturabschnitt 7b des Flächengebildes 7 in Abhängigkeit von der Richtung der Linearbewegung der zweiten Funktionswelle 6b von dieser abgewickelt oder auf diese aufgewickelt wird. Bei einer Linearbewegung der zweiten Funktionswelle 6b von der ersten Schutzposition in die zweite Schutzposition wird der zweite Flächenstrukturabschnitt 7b von der zweiten Funktionswelle 6b abgewickelt und bei einer Bewegung von der zweiten Schutzposition in die erste Schutzposition wird der zweite Flächenstrukturabschnitt 7b auf die zweite Funktionswelle 6b aufgewickelt. Die Länge L der Zwangsführung und damit der Zahnstange 8a ist von der erforderlichen Länge des zweiten Flächenstrukturabschnittes 7b abhängig, die benötigt wird, um den Abstand vom Kassettengehäuse 2 zum Dachhimmel zu überbrücken. Durch die Zwangsführung wird sichergestellt, dass der zweite Flächenstrukturabschnitt nahezu vollständig von der zweiten Funktionswelle 6b abgewickelt bzw. auf die zweite Funktionswelle 6b aufgewickelt wird.

Erreicht die zweite Funktionswelle 6b bei der Linearbewegung in Richtung der zweiten Schutzposition das Ende der Zahnstange 8a, so wird sie in den Führungsschienen 8 nicht mehr verdrehbar, sondern nur noch linear bis zum Erreichen der zweiten Schutzposition geführt. Um eine Drehbewegung außerhalb des zwangsgeführten Bereichs zu verhindern, sind entsprechende, nicht dargestellte Blockiermittel an der zweiten Funktionswelle 6b vorhanden, die eine Drehbewegung außerhalb des zwangsgeführten Bereichs verhindern. Durch die Kraftbeaufschlagung des Flächengebildes 7 durch die Rückholanordnung der ersten Funktionswelle 6a wird das Flächengebilde während der gesamten Linearbewegung gestrafft gehalten. Die Positionsbestimmungsmittel und die Mittel zum Steuern der zweiten Funktionswelle 6b sind im beschriebenen Ausführungsbeispiel durch die Zwangsführung 8a und deren Länge sowie durch die an der zweiten Funktionswelle 6b angeordneten Zahnräder 9 realisiert. Die Mittel zum Steuern der ersten Funktionswelle 6a sind durch die beschriebene Rückholanordnung realisiert.

Zusätzlich ist die zweite Funktionswelle 6b, wie aus Fig. 3a bis 3b ersichtlich ist, auch zwischen der Ruheposition und der ersten Schutzposition nicht verdrehbar in entsprechenden Linearführungen 8b auf beiden Fahrzeugseiten 4 linear geführt.

Je nachdem, ob ein nicht durchsichtiger Flächengebildeabschnitt 7a für die Funktion der horizontalen Laderaumabdeckung oder ein durchsichtiger Flächengebildeabschnitt 7b für die Funktion der vertikalen Trennwand geschaffen werden soll, sind die Funktionswellen 6a und 6b entsprechend antreibbar, um den durchsichtigen Flächengebildeabschnitt 7b oder den undurchsichtigen Flächengebildeabschnitt 7a aufzuspannen und den jeweils anderen Flächengebildeabschnitt 7a, 7b aufzuwickeln. Vorzugsweise ist wenigstens der zweiten Funktionswelle 6b eine elektrische Antriebsvorrichtung zugeordnet, die durch eine Steuereinheit angesteuert wird. Für die Endbereiche der Linearführungsanordnungen 8, die die vertikale und die horizontale erste und zweite Schutzposition definieren, sind Sensormittel vorgesehen, die auch die jeweils von der zweiten Funktionswelle 6b eingenommene, horizontale oder vertikale Schutzpositionen längs der Linearführungsanordnung 8 erfassen und entsprechende Positionssignale an die Steuereinheit weitergeben können.

Fig. 2 zeigt den prinzipiellen Aufbau des Flächengebildes 7 mit den beiden Funktionswellen 6a und 6b. Wie aus Fig. 2 ersichtlich ist, umfasst das Flächengebilde 7 zwei in Längsrichtung aneinander gesetzte Flächenstrukturabschnitte 7a und 7b, wobei der Flächenstrukturabschnitt 7a als blickdichte Folienbahn und der Flächenstrukturabschnitt 7b als durchsichtiges Netzgewebe ausgeführt ist. Der erste Flächenstrukturabschnitt 7a ist von der ersten Funktionswelle 6a auf- oder abwickelbar und der zweite Flächenstrukturabschnitt ist von der zweiten Funktionswelle 6b auf- oder abwickelbar. Die entsprechenden Drehbewegungen werden, wie bereits ausgeführt, in Abhängigkeit von erkannten Positionen, beispielsweise von einer Steuereinheit, freigegeben bzw. aktiviert.

Fig. 3a zeigt die Schutzvorrichtung in der kompakt abgelegten Ruheposition, bei welcher der erste Flächenstrukturabschnitt 7a des Flächengebildes 7 vollständig auf der ersten Funktionswelle 6a aufgewickelt und für eine Ausziehbewegung, d.h. für eine Drehbewegung, freigegeben ist. Der zweite Flächenstrukturabschnitt 7b des Flächengebildes 7 ist vollständig auf der zweiten Funktionswelle 6b aufgewickelt, die für eine Linearbewegung in Richtung der ersten Schutzposition freigegeben und gegen eine Drehbewegung blockiert ist. Die zweite Funktionswelle 6b liegt in der Ruheposition am Schlitz des Kassettengehäuses 5 an.

Fig. 3b zeigt die Schutzvorrichtung in der ersten horizontal ausgezogenen Schutzposition, bei welcher der erste Flächenstrukturabschnitt 7a des Flächengebildes 7 vollständig von der ersten Funktionswelle 6a abgewickelt und für eine Einziehbewegung, d.h. für eine Drehbewegung, freigegeben ist. Der zweite Flächenstrukturabschnitt 7b des Flächengebildes 7 ist vollständig auf der zweiten Funktionswelle 6b aufgewickelt, die für eine Linearbewegung in Richtung der zweiten Schutzposition und für eine Drehbewegung freigegeben ist.

Fig. 3c zeigt die Schutzvorrichtung in der zweiten vertikal ausgezogenen Schutzposition, bei welcher der erste Flächenstrukturabschnitt 7a des Flächengebildes 7 vollständig auf die erste Funktionswelle 6a aufgewickelt und für eine Ausziehbewegung, d.h. für eine Drehbewegung, freigegeben ist. Der zweite Flächenstrukturabschnitt 7b des Flächengebildes 7 ist vollständig von der zweiten Funktionswelle 6b abgewickelt, die für eine Linearbewegung in Richtung der ersten Schutzposition freigegeben und gegen eine Drehbewegung blockiert ist.

Das gestrichelt dargestellte Flächengebilde 7 in Fig. 3b zeigt eine Zwischenposition des Flächengebildes 7 bei einer Linearbewegung der zweiten Funktionswelle 6b von der zweiten in die erste Schutzposition, bei welcher der erste Flächenstrukturabschnitt 7a teilweise wieder von der ersten Funktionswelle abgewickelt und der zweite Flächenstrukturabschnitt 7b teilweise wieder auf die zweite Funktionswelle 6b aufgewickelt ist.

Das gestrichelt dargestellte Flächengebilde 7 in Fig. 3c zeigt eine Zwischenposition des Flächengebildes 7 bei einer Linearbewegung der zweiten Funktionswelle 6b von der ersten zur zweiten Schutzposition, bei welcher der erste Flächenstrukturabschnitt 7a teilweise wieder auf die erste Funktionswelle aufgewickelt ist und der zweite Flächenstrukturabschnitt 7b teilweise von der zweiten Funktionswelle 6b abgewickelt ist.

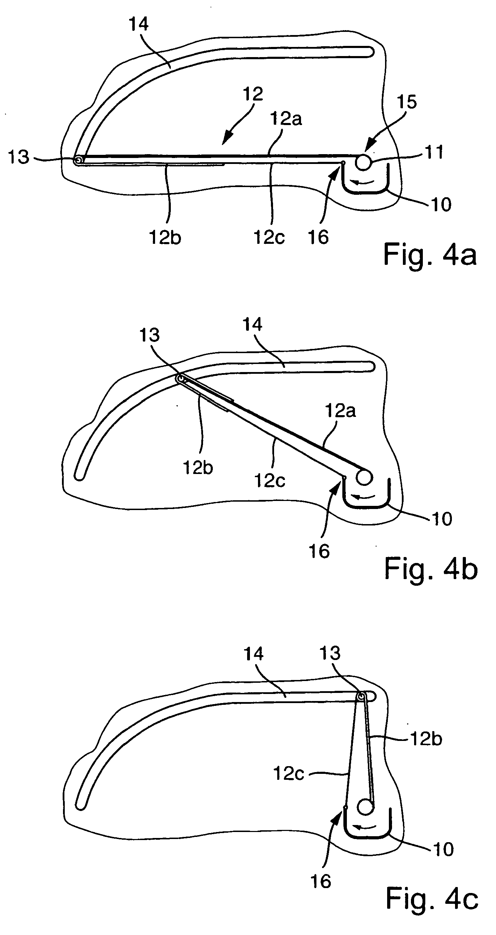

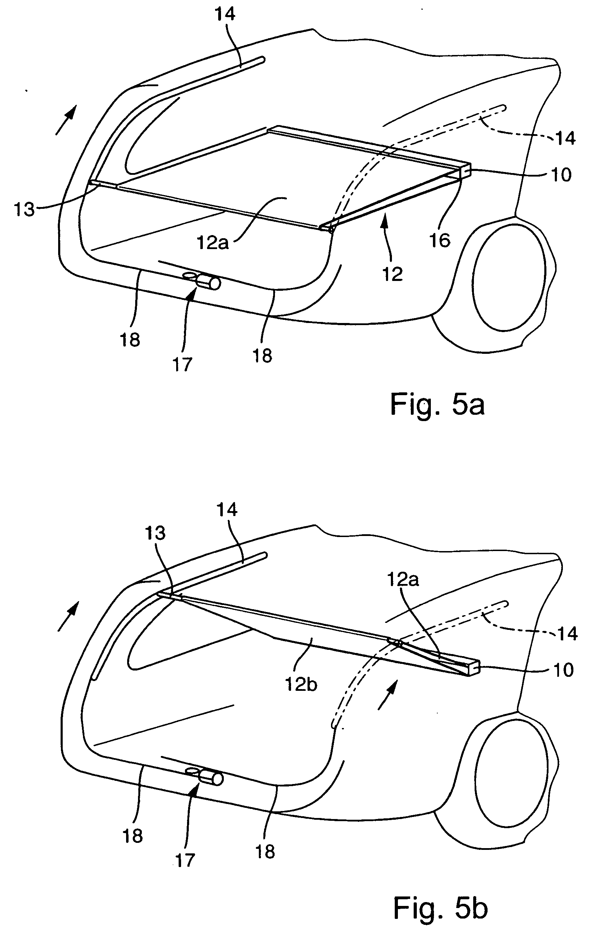

Bei der Ausführungsform nach den Fig. 4a bis 4c und 5a bis 5c ist ein Flächengebilde 12, das mehrere aneinanderschließende Flächenstrukturabschnitte 12a bis 12c aufweist, mit seinem in Abwickelrichtung rückseitigen Stirnendbereich 15 auf einer Wickelwelle 11 befestigt. Die Wickelwelle 11 ist in einem Kassettengehäuse 10 in Fahrzeugquerrichtung ausgerichtet und drehbar gelagert. In Aufwickelrichtung (in der Darstellung gemäß den Fig. 4a bis 4c im Uhrzeigersinn) ist die Wickelwelle 11 durch eine nicht dargestellte Rückholfeder beaufschlagt, die das Flächengebilde 12 in seiner Schutzposition in gespanntem Zustand hält.

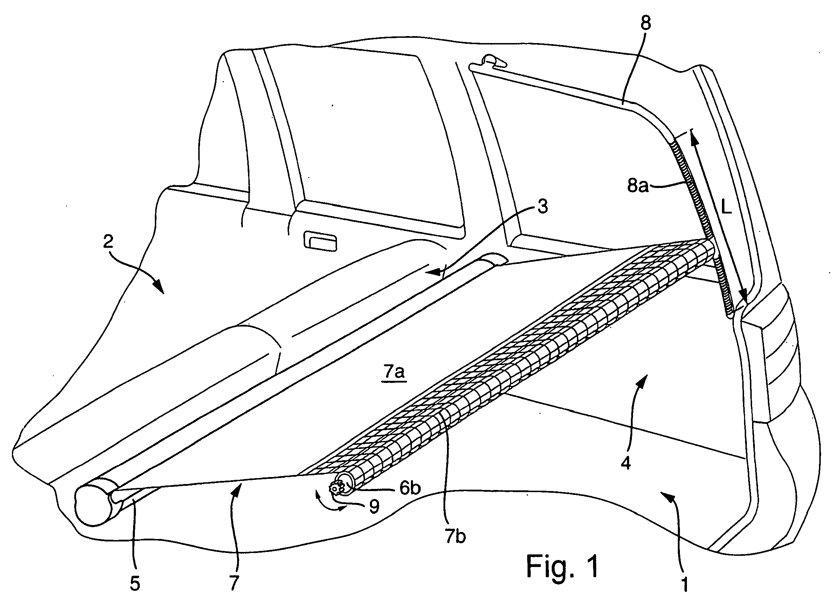

Ein in Abwickelrichtung vorderer Stirnendbereich 16 des Flächengebildes 12 ist an einer Außenseite des Kassettengehäuses 10 befestigt. Das Kassettengehäuse 10 ist fahrzeugfest in dem Fahrzeuginnenraum des Kraftfahrzeugs und dort insbesondere in einem Laderaum gehalten. Das Flächengebilde 12 ist um ein Führungsprofil 13 um etwa 180° umgelenkt, wobei das Führungsprofil 13 in Führungsprofilierungen 14 an gegenüberliegenden Fahrzeugseitenwänden zur Wickelwelle 11 parallel verlagerbar gehalten ist. Das Führungsprofil 13 ist beim dargestellten Ausführungsbeispiel zylindrisch ausgeführt und mit seinen gegenüberliegenden Stirnenden längs der Führungsprofilierungen 14 verlagerbar geführt. Das Führungsprofil ist entweder verschiebbar in den Führungsprofilierungen 14 gehalten, oder aber analog der Ausführungsform nach Fig. 1 mit Hilfe von Zahnritzeln und Zahnstangenführungen rollbeweglich angeordnet. Die Führungsprofilierungen 14 erstrecken sich an den gegenüberliegenden Fahrzeugseitenwandungen ausgehend von einer Bordkantenhöhe an heckseitigen Karosseriesäulen schräg nach oben und nach vorne längs der seitlichen Dachrahmen. Der Abstand des Führungsprofiles 13 relativ zur Wickelwelle 11 verändert sich über die Bewegung des Führungsprofiles 13 längs der Führungsprofilierungen 14. Das Flächengebilde 12 wird während dieser räumlichen Verlagerungsbewegung des Führungsprofiles 13 dadurch gestrafft gehalten, dass die Rückholfeder die Wickelwelle in Aufwickelrichtung beaufschlagt und somit das Flächengebilde 12 unter permanente Zugbelastung setzt.

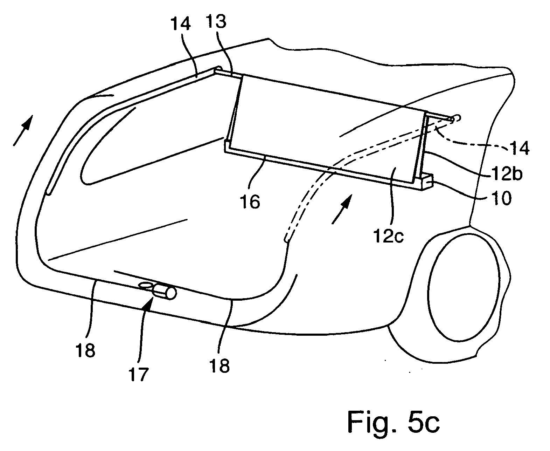

Das Flächengebilde 12 weist insgesamt drei Flächenstrukturabschnitte 12a bis 12c auf, wobei der Flächenstrukturabschnitt 12a eine allenfalls geringe Lichtdurchlässigkeit besitzt. Der Flächenstrukturabschnitt 12b und der Flächenstrukturabschnitt 12c weisen demgegenüber eine wesentlich erhöhte Lichtdurchlässigkeit auf, da diese in der etwa vertikalen Schutzposition des Flächengebildes 12 gemäß den Fig. 4c und 5c einen Durchblick zu einem Heckbereich des Kraftfahrzeugs von einem Fahrgastraum aus ermöglichen sollen.

Der Flächenstrukturabschnitt 12a weist eine Länge auf, die auf die horizontale Erstreckung des zu überdeckenden Laderaumabschnittes abgestimmt ist, wie anhand der Fig. 4a und 5a erkennbar ist. Der Flächenstrukturabschnitt 12b und der Flächenstrukturabschnitt 12c sind zumindest weitgehend gleich lang ausgeführt und weisen jeweils eine Länge auf, die auf eine Höhenerstreckung eines Laderaumabschnittes zwischen dem Kassettengehäuse 10 und einem Dachhimmel abgestimmt ist, um eine Überdeckung dieses nach oben gerichteten Laderaumabschnittes in der etwa vertikalen Schutzposition des Flächengebildes zu ermöglichen.

Das Führungsprofil 13 ist lösbar in den Führungsprofilierungen 14 gehalten, so dass das Flächengebilde bei Bedarf auch zumindest weitgehend vollständig auf die Wickelwelle 11 aufgerollt werden kann. Wenn das Führungsprofil gemäß den Fig. 4a und 5a an einem heckseitigen, unteren Ende der Führungsprofilierungen 14 angeordnet ist, befindet sich das Flächengebilde 12 in seiner etwa horizontal aufgespannten Schutzposition, in der es eine Laderaumabdeckung bildet. Der Flächenstrukturabschnitt 12a erstreckt sich in dieser Schutzposition zwischen der Wickelwelle 11 und dem Führungsprofil 13 und bildet die Oberfläche des Flächengebildes 12. Unterhalb des Flächenstrukturabschnittes 12a verlaufen die Flächenstrukturabschnitte 12b und 12c etwa parallel zurück zum Kassettengehäuse 10. Sobald nun das Führungsprofil 13 längs der Führungsprofilierungen 14 nach oben und nach vorne verlagert wird, wird das Flächengebilde 12 mitgenommen, wobei der Flächenstrukturabschnitt 12a zwangsläufig auf die Wickelwelle 11 aufgewickelt wird. In der etwa vertikalen Schutzposition (Fig. 4c und 5c) ist der FLächenstrukturabschnitt 12a vollständig auf die Wickelwelle 11 aufgewickelt, so dass der Flächenstrukturabschnitt 12b sich zwischen der Wickelwelle 11 und dem oberhalb des Kassettengehäuses 10 positionierten Führungsprofil 13 erstreckt. In dieser Position liegt eine Verbindungsnaht zwischen dem Flächenstrukturabschnitt 12b und dem anschließenden Flächenstrukturabschnitt 12c etwa auf dem Außenmantel des Führungsprofiles 13 auf. Der Flächenstrukturabschnitt 12c erstreckt sich zumindest weitgehend parallel zu dem Flächenstrukturabschnitt 12b ebenfalls nach unten und ist an dem Kassettengehäuse 10 befestigt.

Eine entsprechend umgekehrte Verlagerungsbewegung des Führungsprofiles 13 zurück in die etwa horizontale Schutzposition führt zu einem Abziehen und Abwickeln des Flächenstrukturabschnittes 12a von der Wickelwelle 11, indem das Führungsprofil 13 gegen die Rückholkraft der Rückholfeder der Wickelwelle 11 nach hinten und nach unten bewegt wird.

## Patentansprüche

1. Schutzvorrichtung für einen Laderaum eines Kraftfahrzeugs mit
- einem flexiblen Flächengebilde (7), das zwischen einer kompakt abgelegten Ruheposition und wenigstens einer ausgezogenen Schutzposition beweglich gelagert ist,
- mindestens zwei zueinander beabstandeten Funktionseinrichtungen (6a, 6b), mit denen das Flächengebilde (7) in Verbindung steht,
- zwei in Ausziehrichtung aneinander anschließenden Flächenstrukturabschnitten (7a, 7b) mit unterschiedlicher Lichtdurchlässigkeit, die Teil des Flächengebildes (7) sind, **gekennzeichnet durch**,
- Mittel zur Positionserkennung (8a) des Flächengebildes (7),
- Steuermittel (8a, 9), die in Abhängigkeit von erkannten Positionen wenigstens eine Funktionseinrichtung (6a, 6b) so steuern, dass in einer ersten, etwa horizontal ausgezogenen Schutzposition der erste, weniger lichtdurchlässige Flächenstrukturabschnitt (7a) und in einer zweiten, etwa vertikal ausgezogenen Schutzposition der zweite, stärker lichtdurchlässige Flächenstrukturabschnitt (7b) des Flächengebildes ausgezogen ist.

2. Schutzvorrichtung nach Anspruch 1, **dadurch gekennzeichnet, dass** als Funktionseinrichtungen Funktionswellen (6a, 6b) vorgesehen sind, auf denen das Flächengebilde (7) auf- und abwickelbar gehalten ist.

3. Schutzvorrichtung nach Anspruch 2, **dadurch gekennzeichnet, dass** der erste Flächenstrukturabschnitt (7a) mit einer ersten Funktionswelle (6a) in Wirkverbindung steht und der zweite Flächenstrukturabschnitt (7b) mit einer zweiten Funktionswelle (6b) in Wirkverbindung steht.

4. Schutzvorrichtung nach Anspruch 3, **dadurch gekennzeichnet, dass** den Funktionswellen Antriebsmittel zugeordnet sind, die den jeweiligen Flächenstrukturabschnitt (7a, 7b) wenigstens in Aufwickelrichtung beaufschlagen.

5. Schutzvorrichtung nach Anspruch 4, **dadurch gekennzeichnet, dass** die Steuermittel die Antriebsmittel so zwangssteuern, dass Auf- und Abwickelbewegungen der Flächenstrukturabschnitte (7a, 7b) abhängig von den erfassten Positionen freigegeben und/oder blockiert werden.

6. Schutzvorrichtung nach einem der Ansprüche 1 bis 5, **dadurch gekennzeichnet, dass** wenigstens eine Funktionswelle (6b) an gegenüberliegenden Stirnenden in einer Linearführungsanordnung (8) zwischen der horizontalen und der vertikalen Schutzposition zwangsgeführt ist

7. Schutzvorrichtung nach Anspruch 6, **dadurch gekennzeichnet, dass** die Linearführungsanordnung (8) wenigstens über einen Teilabschnitt (L) ihrer Längserstreckung als Steuermittel eine mechanische Zwangsführung (8a) aufweist.

8. Schutzvorrichtung nach Anspruch 7, **dadurch gekennzeichnet, dass** die mechanische Zwangsführung durch einen in der Linearführungsanordnung (8) integrierten Verzahnungsstrang (8a) gebildet ist, mit dem ein Zahnrad (9) kämmt, das stirnseitig an der Funktionswelle (6b) angeordnet ist.

9. Schutzvorrichtung nach Anspruch 1, **dadurch gekennzeichnet, dass** die Mittel zur Positionserkennung als elektrische und/oder elektronische Sensoren ausgeführt sind, die von einer elektronischen Steuereinheit ausgewertet werden, die in Abhängigkeit von der erkannten Position die Funktionswellen (6a, 6b) über entsprechende Aktuatoren ansteuert.

10. Schutzvorrichtung nach Anspruch 9, **dadurch gekennzeichnet, dass** die Aktivierung der Funktionswellen (6a, 6b) zusätzlich zur erkannten Position von der Richtung der ausgeführten Folgebewegung abhängig ist.

11. Schutzvorrichtung nach Anspruch 10, **dadurch gekennzeichnet, dass** bei der erkannten zweiten Position und einer Folgebewegung in Richtung der ersten Position die zweite Funktionswelle (6b) blockiert ist und bei einer Folgebewegung in Richtung der dritten Position für eine Ausziehbewegung freigebbar ist.

12. Schutzvorrichtung nach Anspruch 10 oder 11, **dadurch gekennzeichnet, dass** bei Erreichen der dritten Position beide Funktionswellen (6a, 6b) blockierbar sind und bei einer Folgebewegung in Richtung der zweiten Position die erste Funktionswelle (6a) für eine Ausziehbewegung und die zweite Funktionswelle (6b) für eine Einziehbewegung freigebbar ist.

13. Schutzvorrichtung für einen Laderaum eines Kraftfahrzeugs mit einem flexiblen Flächengebilde (7), das zwischen einer kompakt abgelegten Ruheposition und wenigstens einer ausgezogenen Schutzposition beweglich gelagert ist,
wobei wenigstens zwei in Ausziehrichtung aneinander anschließende Flächenstrukturabschnitte (12a bis 12c) mit unterschiedlicher Lichtdurchlässigkeit vorgesehen sind, die Teil des Flächengebildes (12) sind, **dadurch gekennzeichnet, dass** ein in Ausziehrichtung rückseitiger Stirnendbereich (15) des Flächengebildes (12) an einer fahrzeugfest und drehbeweglich gelagerten Wickelwelle (11) befestigt ist, wobei das Flächengebilde (12) an einem parallel zur Wickelwelle (11) im Laderaum beweglich gelagerten Führungsprofil (13) umgelenkt ist, und wobei ein in Ausziehrichtung vorderseitiger Stirnendbereich (16) des Flächengebildes (12) an einem zu der Wickelwelle (11) benachbarten, fahrzeugfesten Bauteil (10) befestigt ist.

14. Schutzvorrichtung nach Anspruch 13, **dadurch gekennzeichnet, dass** die Längen der Flächenstrukturabschnitte (12a bis 12c) auf die jeweiligen räumlichen Erstreckungen der zu überdeckenden Laderaumabschnitte abgestimmt sind.

## Claims

1. A protective device for a loading space of a motor vehicle having
- a flexible flat article (7) movably mounted between a compactly stowed, rest position and at least one extended protective position,
- at least two spaced functional devices (6a, 6b) to which the flat article (7) is connected,
- two surface structural portions (7a, 7b) adjoining one another in the direction of extension and having a different light transmission and forming part of the flat article (7),
**characterised by**
- means (8a) for detecting the position of the flat article (7),
- control means (8a, 9) which, as a function of detected positions, control at least one functional device (6a, 6b) in such a way that in a first, approximately horizontally extended protective position the first, less light-transmitting surface structural portion (7a) is extended and in a second, approximately vertically extended protective position the second, more light-transmitting surface structural portion (7b) of the flat article is extended.

2. A protective device according to claim 1, **characterised in that** the functional devices are constituted by functional shafts (6a, 6b), on which the flat article (7) is held so that it can be wound on and off.

3. A protective device according to claim 2, **characterised in that** the first surface structural portion (7a) is operatively connected to a first functional shaft (6a) and the second surface structural portion (7b) is operatively connected to a second functional shaft (6b).

4. A protective device according to claim 3, **characterised in that** drive means that act on the particular surface structural portion (7a, 7b) at least in the winding-on direction are associated with the functional shafts.

5. A protective device according to claim 4, **characterised in that** the control means positively control the drive means in such a way that winding-on and winding-off movements of the surface structural portions (7a, 7b) are released and/or blocked as a function of the detected positions.

6. A protective device according to any one of claims 1 to 5, **characterised in that** at least one functional shaft (6b) is positively guided at opposite front ends in a linear guide arrangement (8) between the horizontal and vertical protective positions.

7. A protective device according to claim 6, **characterised in that** the linear guide arrangement (8) has at least over part (L) of its linear extent a mechanical positive guide (8a) as control means.

8. A protective device according to claim 7, **characterised in that** the mechanical positive guide is formed by serrations (8a) integrated in the linear guide arrangement (8) and with which a toothed gear (9) that is positioned frontally on the functional shaft (6b) meshes.

9. A protective device according to claim 1, **characterised in that** the position detection means are designed as electrical and/or electronic sensors, which are evaluated by an electronic control unit which, as a function of the detected position, controls the functional shafts (6a, 6b) by means of corresponding actuators.

10. A protective device according to claim 9, **characterised in that**, in addition to the detected position, the activation of the functional shafts (6a, 6b) is dependent on the direction of the following movement performed.

11. A protective device according to claim 10, **characterised in that** with the detected second position and a following movement in the direction of the first position, the second functional shaft (6b) is blocked and is releasable for an extending movement in the case of a following movement in the direction of the third position.

12. A protective device according to claim 10 or 11, **characterised in that** on reaching the third position both functional shafts (6a, 6b) are arranged to be blocked and in the case of a following movement in the direction of the second position, the first functional shaft (6a) is releasable for an extending movement and the second functional shaft (6b) for a retracting movement.

13. A protective device for a loading space of a motor vehicle having a flexible flat article (7) that is movably mounted between a compactly stowed, rest position and at least one extended protective position, wherein at least two surface structural portions (12a to 12c) adjoining one another in the direction of extension and having different light transmission and being part of the flat article (12) are provided, **characterised in that** an end region (15) of the flat article (12) at the rear in the direction of extension is secured to a winding roller (11) built into the vehicle and rotatably mounted, the flat article (12) being guided at a guide profile (13) movably mounted parallel to the winding roller (11) in the loading space, and an end region (16) of the flat article (12) at the front in the direction of extension being secured to a vehicle-mounted component (10) adjacent to the winding roller (11).

14. A protective device according to claim 13, **characterised in that** the lengths of the surface structural portions (12a to 12c) are matched to the particular spatial extents of the loading space sections to be covered over.

## Revendications

1. Dispositif de protection pour un coffre d'un véhicule automobile, comprenant :
- une structure de surface (7) flexible, montée de façon mobile, entre une position de repos compacte, et au moins une position de protection, étirée,
- au moins deux dispositifs fonctionnels (6a, 6b) espacés l'un de l'autre, avec lesquels la structure de surface (7) est en liaison,
- deux tronçons de structure de surface (7a, 7b) se raccordant l'un à l'autre dans la direction d'étirement ayant une transparence à la lumière différente, faisant partie de la structure de surface (7),
**caractérisé par**
- des moyens d'identification de position (8a) de la structure de surface (7),
- des moyens de commande (8a, 9), commandant, en fonction de positions identifiées, au moins un dispositif fonctionnel (6a, 6b), de manière que, en une première position de protection, étirée, à peu près horizontale, le premier tronçon de structure de surface (7a), moins transparent à la lumière, de la structure de surface, soit extrait, et en une deuxième position de protection étirée, à peu près verticale, le deuxième tronçon de structure de surface (7b), plus transparent à la lumière, de la structure de surface soit extrait.

2. Dispositif de protection selon la revendication 1, **caractérisé en ce que** l'on prévoit comme dispositifs fonctionnels, des arbres fonctionnels (6a, 6b), sur lesquels la structure de surface (7) est maintenue de façon à pouvoir être enroulée et déroulée.

3. Dispositif de protection selon la revendication 2, **caractérisé en ce que** le premier tronçon de structure de surface (7a) est en liaison fonctionnelle avec un premier arbre fonctionnel (6a) et le deuxième tronçon de structure de surface (7b) est en liaison fonctionnelle avec un deuxième arbre fonctionnel (6b).

4. Dispositif de protection selon la revendication 3, **caractérisé en ce que** sont associés aux arbres fonctionnels des moyens d'entraînement, sollicitant, au moins en direction de l'enroulement, le tronçon de structure de surface (7a, 7b) respectif.

5. Dispositif de protection selon la revendication 4, **caractérisé en ce que** les des moyens de commande commandent de façon forcée les moyens d'entraînement, de manière que des déplacements d'enroulement et de déroulement des tronçons de structure de surface (7a, 7b) soient libérés et/ou bloqués, en fonction des positions détectées.

6. Dispositif de protection selon l'une des revendications 1 à 5, **caractérisé en ce qu'**au moins un arbre fonctionnel (6b) est guidé de façon contrainte, entre la position de protection horizontale et la position de protection verticale, au niveau des extrémités frontales opposées, en un agencement de guidage linéaire (8).

7. Dispositif de protection selon la revendication 6, **caractérisé en ce que** le dispositif de guidage linéaire (8) présente au moins un guidage forcé (8a) mécanique, en tant que moyens de commande, sur un tronçon partiel (L) de sa longueur.

8. Dispositif de protection selon la revendication 7, **caractérisé en ce que** le guidage forcé mécanique est formé par un tronçon denté (8a) intégré dans le dispositif de guidage linéaire (8), avec lequel s'engrène une roue dentée (9), disposée frontalement sur l'arbre fonctionnel (6b).

9. Dispositif de protection selon la revendication 1, **caractérisé en ce que** les moyens d'indentification de position sont réalisés sous la forme de capteurs électriques et/ou électroniques, soumis à une évaluation, de par une unité de commande électronique, commandant, en fonction de la position identifiée, les arbres fonctionnels (6a, 6b) par l'intermédiaire d'actionneurs correspondants.

10. Dispositif de protection selon la revendication 9, **caractérisé en ce que** l'activation des arbres fonctionnels (6a, 6b) dépend, en plus de la position identifiée, du sens de déplacement de continuation effectué.

11. Dispositif de protection selon la revendication 10, **caractérisé en ce que**, à la deuxième position identifiée et en cas de déplacement de continuation dans le sens de la première position, le deuxième arbre fonctionnel (6b) est bloqué et, en cas de déplacement de continuation dans le sens de la troisième position, il peut être libéré pour effectuer un déplacement d'extraction.

12. Dispositif de protection selon la revendication 10 ou 11, **caractérisé en ce que**, à l'atteinte de la troisième position, les deux arbres fonctionnels (6a, 6b) sont susceptibles être bloqués et, en cas de déplacement de continuation dans le sens de la deuxième position, le premier arbre fonctionnel (6a) est susceptible d'être libéré, pour effectuer un déplacement d'extraction, et le deuxième arbre fonctionnel (6b) est susceptible être libéré, pour effectuer un déplacement d'introduction.

13. Dispositif de protection pour un coffre d'un véhicule automobile avec une structure de surface (7) flexible, montée mobile entre une position de repos compacte et au moins une position de protection étirée, au moins deux tronçons de structure de surface (12a à 12c), se raccordant l'un à l'autre dans la direction d'étirement, avec une transparence à la lumière différente, étant prévus, faisant partie de la structure de surface (12) ,**caractérisé en ce qu'**une zone d'extrémité frontale (15), située à l'arrière dans la direction de l'étirement de la structure de surface (12), est fixée à un arbre d'enroulement (11) monté de façon fixe sur le véhicule et mobile en rotation, la structure de surface (12) étant déviée par passage sur un profilé de guidage (13) monté mobile dans le coffre, parallèlement à l'arbre d'enroulement (11), et une zone d'extrémité frontale (16), située à l'avant dans le sens de l'étirement, de la structure de surface (12) étant fixée sur un composant (10) fixé au véhicule, voisin de l'arbre d'enroulement (11).

14. Dispositif de protection selon la revendication 13, **caractérisé en ce que** les longueurs des tronçons de structure de surface (12a à 12c) sont adaptées aux étendues spatiales respectives des tronçons de coffre à couvrir.
